# EUROPÄISCHE PATENTSCHRIFT

(11) **EP 0 973 599 B1**
(45) Veröffentlichungstag und Bekanntmachung des Hinweises auf die Patenterteilung: **07.08.2002**
(21) Anmeldenummer: 98903998.7
(22) Anmeldetag: 07.01.1998
(51) Int. Cl.: B01D 53/26

(54) **TROCKNUNGSVORRICHTUNG FÜR DRUCKLUFT**
DRYER FOR COMPRESSED AIR
DISPOSITIF DE SECHAGE D'AIR COMPRIME

(30) Priorität: 10.04.1997 DE 19714887
(43) Veröffentlichungstag der Anmeldung: 26.01.2000
(73) Patentinhaber: Beko Kondensat-Technik GmbH, 41468 Neuss (DE)
(72) Erfinder: KOCH, Berthold, D-41468 Neuss (DE)
(74) Vertreter: Bauer, Wulf, Dr.
(86) Internationale Anmeldenummer: DE9800018
(87) Internationale Veröffentlichungsnummer: WO9845025

(56) Entgegenhaltungen:
- GB-A- 1 440 963
- US-A- 5 205 842
- US-A- 5 259 869
- US-A- 5 605 564

## Beschreibung

Die Erfindung bezieht sich auf eine Trocknungsvorrichtung für Druckluft mit einem Filtergehäuse, a) das einen Einlaß für feuchte Druckluft, einen Auslaß für getrocknete Druckluft, einen Spüllufteingang und einen Spülluftausgang aufweist und b) in dem ein Membranfilter, vorzugsweise ein Bündel Hohlfasermembranen, angeordnet ist, auf dessen einer Filterseite die Druckluft entlangstreicht, auf dessen anderer Filterseite die Spülluft, insbesondere in Gegenrichtung zur Druckluft, strömt und das selektiv durchlässig ist für Wasserdampf und mit einer Speiseleitung, durch die vom Auslaß stammende und damit getrocknete Druckluft entspannt in den Spüllufteingang eingespeist wird.

Eine derartige Trocknungsvorrichtung ist aus der US-Patentschrift 5,002,590 bekannt. Beim Einsatz von Druckluft, beispielsweise in der Industrietechnik oder der Medizintechnik, ist Feuchtigkeit im Leitungsnetz und an den Verbrauchsstellen ein Qualitätsproblem. Eine wichtige Aufgabe ist daher immer die Trocknung der Druckluft.

Hierzu werden Membranfilter eingesetzt, die selektiv durchlässig sind für Wasserdampf. In dem Filtergehäuse ist ein Bündel hochselektiver Hohlfasermembranen angeordnet, durch die feuchte Druckluft strömt. Die feuchte Druckluft ist vorzugsweise gefiltert, damit noch in ihr enthaltene Schmutzpartikel, Ölnebel und Kondensat zurückgehalten werden, also die Hohlfasermembranen nicht verstopfen. Durch die Hohlfasermembranen diffundiert Wasserdampf nach außen. Am Auslaß für getrocknete Druckluft wird ein geringer Teilstrom der Druckluft abgezweigt und nach Expansion als Spülluft benutzt. Die Spülluft wird im Gegenstrom zur Druckluft über die Außenseite der Hohlfasern geführt. Aufgrund des Unterschiedes in der Wasserdampfkonzentration wird eine ständige Wanderung der Wassermoleküle aus der Druckluft in die Spülluft erreicht.

Dieser Vorgang läuft kontinuierlich ab. Die Spülluft trocknet ständig die eintretende, feuchte Druckluft. Nur Wassermoleküle können die Membranen der Hohlfasern durchdringen. Die Zusammensetzung der getrockneten Druckluft bleibt unverändert. Als Ergebnis hat man reine, trockene Druckluft.

Nachteilig ist aber der ständige Spülluftbedarf. Die Spülluft wird nach dem Stand der Technik unmittelbar aus der Druckluft abgezweigt, ein Teil der Druckluft geht damit ständig für die Spülung verloren. Insbesondere geht die in die Spülluft hineingesteckte, für die Kompression benötigte Energie nutzlos verloren, denn der abgezweigte Teilstrom der Druckluft wird expandiert, bevor er dem Spüllufteingang zugeleitet wird.

Hier setzt nun die Erfindung ein. Sie hat es sich zur Aufgabe gemacht, eine Trocknungsvorrichtung der eingangs genannten Art für Druckluft anzugeben, bei der die Druckluft innerhalb der Trocknungsvorrichtung wirtschaftlicher eingesetzt wird und ein größerer Teil der Druckluft für ein druckbetriebenes Gerät zur Verfügung steht.

Ausgehend von der Trocknungsvorrichtung der eingangs genannten Art wird diese Aufgabe dadurch gelöst, dass in der Speiseleitung ein Absperrmittel, dessen Sperrstellung vom Druckluftverbrauch beeinflußt ist, angeordnet ist.

Nach dem Stand der Technik strömt ständig Spülluft durch das Filtergehäuse, unabhängig davon, ob am Druckluft- oder Nutzluftausgang tatsächlich für ein druckluftbetriebenes Gerät Druckluft entnommen wird oder nicht. Auf diese Weise geht ständig ein merklicher Anteil der zur Verfügung gestellten Druckluft verloren. Diese Erfindung schlägt hierfür Einsparungen vor.

GB-A-1440963 offenbart eine Vorrichtung zur Trocknung von Druckluft mit einem Filtergehäuse, das einen Einlaß für feuchte Druckluft, einen Auslaß für getrocknete Druckluft, einen Spüllufteingang und einen Spülluftausgang aufweist und in dem ein Membranfilter angeordnet ist. Die Vorrichtung enthält eine Speiseleitung, durch die vom Auslaß stammende und damit getrocknete Druckluft in die Spülleitung eingespeist wird, wobei der Speiseleitung ein Absperrmittel zugeordnet ist.

Die Erfindung geht im wesentlichen zwei Wege: Einerseits schlägt sie vor, den abgezweigten Druckluftstrom, der dem Spüllufteingang zugeführt wird, so zu steuern, dass Spülluft tatsächlich nur dann zur Verfügung steht, wenn Druckluft durch ein druckluftbetriebenes Gerät entnommen wird. Hierzu wird in den Arbeitspausen, in denen das druckluftbetriebene Gerät nicht benutzt wird, der Spülluftstrom abgeschaltet oder zumindest soweit heruntergeregelt, dass deutlich weniger Druckluft für die Entfeuchtung verbraucht wird. Es kann aber auch eine Regelung in Abhängigkeit von dem entnommenen Strom an Druckluft erfolgen, indem mehr oder weniger Spülluft zur Verfügung gestellt wird, wenn mehr oder weniger Druckluft für ein nachgeschaltetes, druckluftbetriebenes Gerät entnommen wird.

Zum anderen schlägt die Erfindung vor, die Spülluft erst hinter einem druckluftbetriebenen Gerät, also an dessen Luftauslaß, zu entnehmen und von dort dem Spüllufteingang zuzuführen, ggf. unter Zwischenschaltung eines Luftstromverteilers und/oder Gebläses.

In einer besonders bevorzugten Ausführung hat das Absperrmittel einen eigenen Antrieb, insbesondere einen elektrischen, elektromagnetischen, hydraulischen oder pneumatischen Antrieb. Vorzugsweise ist das Absperrmittel als ein Magnetventil oder ein druckluftbetriebenes Gerät ausgebildet. Aufgrund des eigenen Antriebs kann das Absperrmittel gesteuert werden, beispielsweise über eine Betriebsschaltung eines druckluftbetriebenen Geräts, über einen Strömungsfühler, der am Auslaß auf dem Wege zu einem Verbraucher angeordnet ist oder dergleichen.

Als besonders bevorzugt hat es sich herausgestellt, die Spülluft am Luftausgang eines druckluftbetriebenen Gerätes zu entnehmen. Diese Vorrichtung und die entsprechende Verfahrensweise haben den Vorteil, dass überhaupt keine Druckluft für die Spülung verloren geht, vielmehr wird die gesamte, am Auslaß vorliegende Druckluft für mindestens ein druckluftbetriebenes Gerät benutzt. Erst hinter dem druckluftbetriebenen Gerät wird die Spülluft tatsächlich abgenommen, insbesondere zweigt also die Speiseleitung ab, die den Spüllufteingang mit Luft versorgt. Bei dieser Ausführung laufen also die Hauptleitung für Druckluft, die nach dem Stand der Technik das druckluftbetriebene Gerät versorgt, und die Speiseleitung zunächst parallel und trennen sich ggf. erst hinter dem druckluftbetriebenen Gerät.

Die zuletzt beschriebene Verfahrensweise entspricht einer seriellen Anordnung von Verbraucher, also dem druckluftbetriebenen Gerät, und Spüllufteingang sowie Spülluftausgang. Nach dem Stand der Technik dagegen ist eine parallele Anordnung vorbekannt, also Aufspalten des Druckluftstroms unmittelbar hinter dem Auslaß für getrocknete Druckluft und Zuleiten eines Hauptstroms durch eine Hauptleitung zum Verbraucher sowie eines abgezweigten Stroms als Spülluft in den Spüllufteingang.

Die erfindungsgemäße Hintereinanderschaltung setzt voraus, dass der druckluftbetriebene Verbraucher die Druckluft selbst nicht verunreinigt, insbesondere sie nicht mit Wasser versetzt. Aber auch andere Verunreinigungen, wie z.B. Öl oder Schmutzpartikel, wären schädlich. Es ist also darauf zu achten, dass der druckluftbetriebene Verbraucher, durch den die Druckluft strömt, bevor sie als Spülluft Verwendung findet, entsprechend abgedichtet und sauber ausgeführt ist.

Obwohl bei der beschriebenen seriellen Anordnung es grundsätzlich möglich ist, den gesamten Luftstrom, der den druckluftbetriebenen Verbraucher durchströmt hat, in den Spüllufteingang einzuspeisen, wird eine Aufteilung dieses Luftstroms bevorzugt. Hierzu ist ein Mengenteiler vorgesehen, der einen Teilstrom zum Spüllufteingang lenkt, während ein anderer Teilstrom in die Umgebung entlassen wird. Diese Mengenregelung kann gesteuert werden, so dass in Abhängigkeit vom Druckluftverbrauch des druckluftbetriebenen Verbrauchers ein mehr oder weniger großer Anteil an Spülluft dem Spüllufteingang zur Verfügung gestellt wird.

Bei der erfindungsgemäßen Hintereinanderschaltung kann sich der Druckverlust im Filtergehäuse und zwischen Spüllufteingang und Spülluftausgang nachteilig bemerkbar machen. Um ihn zu kompensieren, sind mehrere Wege möglich. So können erstens der Spüllufteingang, der Querschnitt für das Durchströmen von Spülluft und der Spülluftausgang so ausreichend bemessen werden, dass ein möglichst geringer Druckverlust im Filtergehäuse entsteht. Derartige Filtergehäuse sind dann insbesondere für die besprochene Hintereinanderschaltung geeignet. Zweitens kann aber auch hinter dem druckluftbetriebenen Gerät ein Ventilator oder dergleichen angeordnet sein, der den beschriebenen Druckverlust auffängt. Auf diese Weise ist sichergestellt, dass der druckluftbetriebene Verbraucher gegen den Druck Null arbeiten kann und lediglich die an seinem Luftausgang herausströmende Luft wieder so entnommen und angetrieben wird, dass sie durch den Spülbereich des Filtergehäuses hindurchströmen kann. Gegebenenfalls kann auch ein Luftsammelbehälter oder Ausgleichsbehälter im Bereich der Speiseleitung eingesetzt werden, um Druckschwankungen auszugleichen.

Im oben beschriebenen Fall ist der druckluftbetriebene Verbraucher also als Absperrmittel im Sinne der vorliegenden Erfindung eingesetzt. Nur wenn durch den druckluftbetriebenen Verbraucher Druckluft strömt, steht auch Spülluft zur Verfügung, die ja stromabwärts von diesem Verbraucher entnommen wird und findet damit die Trocknung der Druckluft in der Trocknungsvorrichtung statt. Dies hat den Vorteil, dass immer nur dann Spülluft zur Verfügung gestellt wird, wenn auch tatsächlich Druckluft abgenommen wird.

Insgesamt führt die Erfindung dazu, dass für den Spülvorgang in der Trocknungsvorrichtung wesentlich weniger an primärer Druckluft benötigt wird, als dies nach dem Stand der Technik der Fall ist. Entweder wird der unmittelbar hinter dem Auslaß für getrocknete Druckluft abgezweigte Strom an Spülluft so geschaltet und ggf. auch geregelt, dass eine unnütze Durchspülung des Spülbereichs mit Spülluft möglichst vermieden wird, oder die Spülluft wird gleich erst hinter einem druckluftbetriebenen Verbraucher entnommen, wo sie einerseits entspannt und andererseits immer noch sauber ist und wird von dort dem Spülbereich zugeführt. In diesem Fall steht die gesamte, am Auslaß für getrocknete Druckluft vorliegende Druckluftmenge ausschließlich für den druckluftbetriebenen Verbraucher zur Verfügung. Anschließend steht sie als Spülluft zur Verfügung.

Vorzugsweise wird die Trocknungsvorrichtung der hier in Rede stehenden Art unmittelbar in Nähe eines druckluftbetriebenen Verbrauchers angeordnet. Typischerweise und bevorzugt ist auch jeweils einem einzelnen druckluftbetriebenen Verbraucher eine Trocknungsvorrichtung zugeordnet. Dies schließt allerdings nicht aus, dass mit einer Trocknungsvorrichtung mehrere druckluftbetriebene Verbraucher bedient werden können.

Weitere Vorteile und Merkmale der Erfindung ergeben sich aus den übrigen Ansprüchen sowie der nun folgenden Beschreibung von nicht einschränkend zu verstehenden Ausführungsbeispielen, die unter Bezugnahme auf die Zeichnung näher erläutert werden. In dieser zeigen:
- FIG. 1:: eine Darstellung in Draufsicht einer Trocknungsvorrichtung der hier in Rede stehenden Art mit einem regelbaren Strömungswiderstand als Absperrmittel,
- FIG. 2:: eine Darstellung entsprechend Figur 1 mit einem Ventil mit Stellantrieb als Absperrmittel,
- FIG. 3:: eine Darstellung entsprechend Figur 2, bei der nunmehr das Ventil über eine Steuereinheit angesteuert ist und hinter dem Ausgang für getrocknete Druckluft ein Strömungsfühler in Form eines Strömungswächters angeordnet ist,
- FIG. 4:: eine Darstellung entsprechend Figur 3 mit einem Strömungssensor anstelle eines Strömungswächters,
- FIG. 5:: eine Trocknungsvorrichtung, bei der am Auslaß für getrocknete Druckluft ein druckluftbetriebener Verbraucher angeordnet ist und die Spülluft am Luftausgang dieses Verbrauchers entnommen wird, es liegt hier eine Hintereinanderschaltung vor,
- FIG. 6:: eine Darstellung entsprechend Figur 5, jedoch zusätzlich mit einer Mengenregelung im Bereich der Spülluft,
- FIG. 7:: eine Darstellung entsprechend Figur 5, jedoch nunmehr mit einem zusätzlichen Ventilator im Bereich der Spülluft und
- FIG. 8:: eine Darstellung einer Trocknungsvorrichtung im Schnittbild mit relativ großen Durchlaßquerschnitten im Bereich des Durchflusses der Spülluft, geeignet insbesondere für eine Vorrichtung nach den Figuren 5 bis 7.

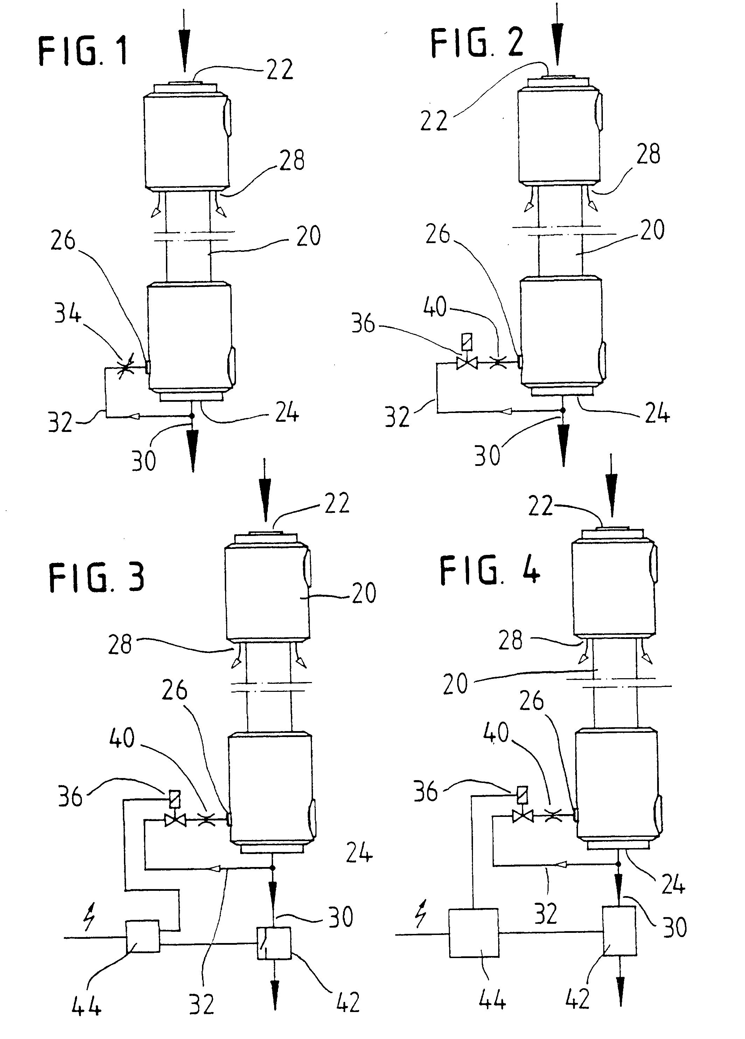

Figur 1 zeigt ein Filtergehäuse 20, das einen Einlaß 22 für feuchte Druckluft (oberer großer Pfeil), einen Auslaß 24 für getrocknete Druckluft, einen Spüllufteingang 26 und einen Spülluftausgang 28 hat. Am Einlaß 22 liegt von einem Druckluftsystem gelieferte Druckluft an, vorzugsweise ist diese Druckluft durch ein dem Einlaß 22 vorgeschaltetes Feinfilter und ggf. einen Kondensatableiter aufbereitet.

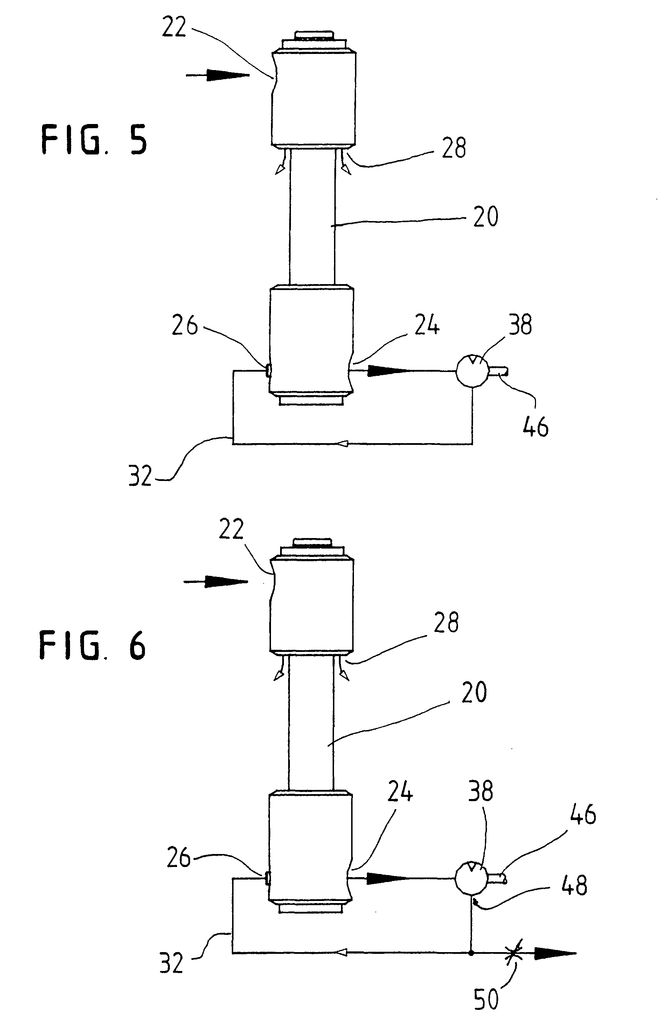

Am Auslaß 24 wird der Druckluftstrom aufgeteilt. Ein Hauptstrom fließt durch die Hauptleitung 30 einem druckluftbetriebenen Verbraucher zu, der hier nicht dargestellt ist, in Figur 5 aber dargestellt ist. Ein geringer Anteil fließt durch eine Speiseleitung 32 zum Spüllufteingang 26, dieser Anteil stellt die Spülluft dar. In der Speiseleitung 32 befindet sich, wie ansich bekannt, eine Drossel, die hier als regelbarer Strömungswiderstand 34 weitergebildet ist.

Je nach Bedarf an Druckluft in der Hauptleitung 30 wird der regelbare Strömungswiderstand verändert. Wird keine Druckluft in der Hauptleitung 30 benötigt, so wird der regelbare Strömungswiderstand 34 geschlossen. Bei großem Bedarf an Druckluft in der Hauptleitung 30 wird der regelbare Strömungswiderstand 34 entsprechend ausreichend weit geöffnet.

Wenn die Drossel 34 eine manuell einstellbare Drossel ist, wird sie in der Praxis nur auf einen festen Betriebspunkt eingestellt. Dieser kann von Zeit zu Zeit, beispielsweise bei Anschluß unterschiedlicher Verbraucher, verändert werden. Er kann aber auch auf einen Betriebspunkt fest eingestellt werden.

Die Drossel kann aber auch anderweitig einstellbar sein, hierauf wird insbesondere in den folgenden Ausführungen eingegangen. So kann die Drossel 34 beispielsweise motorisch einstellbar sein, man kommt dann zu einer Lösung ähnlich Figur 2.

Im Ausführungsbeispiel nach Figur 2 sind die Drosselfunktion und die Ventilfunktion des regelbaren Strömungswiderstandes aufgetrennt. Es ist ein elektromagnetisches Ventil 36 vorgesehen, das einer fest eingestellten Drossel 40 vorgeschaltet ist. Je nach Druckluftbedarf in der Hauptleitung 30 wird das elektromagnetische Ventil geöffnet, teilweise geöffnet oder geschlossen.

Die entsprechende Schaltung für die Ausführungen nach Figur 2 ist in Figur 3 dargestellt. Hier ist in der Hauptleitung 30 ein Strömungsfühler 42 angeordnet, der als Strömungswächter ausgebildet ist. Unter Strömungswächter wird eine Überwachung einer Luftströmung mit Schaltfunktion verstanden. Wenn durch die Hauptleitung 30 ein ausreichender Strom an Druckluft strömt, schaltet der Strömungsfühler 42, das elektromagnetische Ventil 36 öffnet und Spülluft durchströmt das Filtergehäuse 20. Ansonsten, also bei zu geringem Druckluftverbrauch, wie er beispielsweise bei Leckagen im System vorliegt, oder bei dem Druckluftverbrauch Null wird über den Strömungsfühler 42 und in Verbindung mit einer Steuereinheit 44 das elektromagnetische Ventil 36 vollständig geschlossen, so dass keine Spülluft durch die Speiseleitung 32 fließen kann.

Die Ausführung nach Figur 4 entspricht weitgehend derjenigen nach Figur 3, jedoch ist nunmehr eine Proportionalregelung vorgesehen. Anstelle eines Strömungswächters mit nur zwei Schaltzuständen ist nunmehr als Strömungsfühler 42 ein Strömungssensor vorgesehen. Er kann beispielsweise als Windrad ausgeführt sein, dessen Umdrehungszahl pro Minute erfaßt wird. Es kann sich um ein im Luftstrom hängendes Pendel handeln, das je nach Stärke des Luftstroms mehr oder weniger ausgelenkt wird. Die Auslenkung wird beispielsweise über Licht und fotoelektrische Empfänger erfaßt.

Je größer der Druckluftstrom in der Hauptleitung 30 ist, um so größer ist das Signal des Strömungsfühlers 32, um so weiter öffnet das elektromagnetische Ventil 36. Wenn kein Druckluftstrom nachweisbar ist, bleibt das elektromagnetische Ventil 36 geschlossen, wird also keine Spülluft zur Verfügung gestellt.

Das Ausführungsbeispiel nach Figur 5 zeigt einen neuen, anderen Ansatz. Es wird nun nicht mehr ein Teil der unmittelbar am Auslaß 24 vorliegenden Druckluft als Spülluft verwendet, vielmehr steht die gesamte Druckluft einem druckluftbetriebenen Verbraucher 38 zur Verfügung und die Spülluft wird erst stromabwärts dieses Verbrauchers 38 abgezweigt. Der Verbraucher 38 wirkt dann als Absperrmittel, er hat zugleich auch die Funktion der Drossel 40.

Im gezeigten Ausführungsbeispiel nach Figur 5 ist der druckluftbetriebene Verbraucher 38 eine Pumpe oder ein ähnliches Antriebsgerät, es wird eine Welle 46 angetrieben. Auf die Art des druckluftbetriebenen Verbrauchers 38 kommt es nicht an. Er kann beliebig ausgebildet sein. An ihn wird aber die Anforderung gestellt, dass die Druckluft nicht belastet wird, insbesondere nicht mit Wasserdampf.

Das Ausführungsbeispiel nach Figur 6 entspricht weitestgehend dem Ausführungsbeispiel nach Figur 5, jedoch ist nunmehr eine Mengenregelung vorgesehen. Am Luftausgang 48 des druckluftbetriebenen Verbrauchers 38 wird zunächst die gesamte, im Verbraucher 38 genutzte, nunmehr weitgehend entspannte Luft entnommen, sie wird aufgeteilt in einen Teilstrom, der als Spülluft verwendet wird und direkt dem Spüllufteingang 26 zugeleitet wird und einen Teilstrom, der über einen regelbaren Widerstand 50 in die Atmosphäre entlassen wird, siehe Pfeil. Auf diese Weise wird erreicht, dass nur ein Teil der gesamten, durch den Verbraucher 38 hindurchgeführten Luft als Spülluft eingesetzt wird.

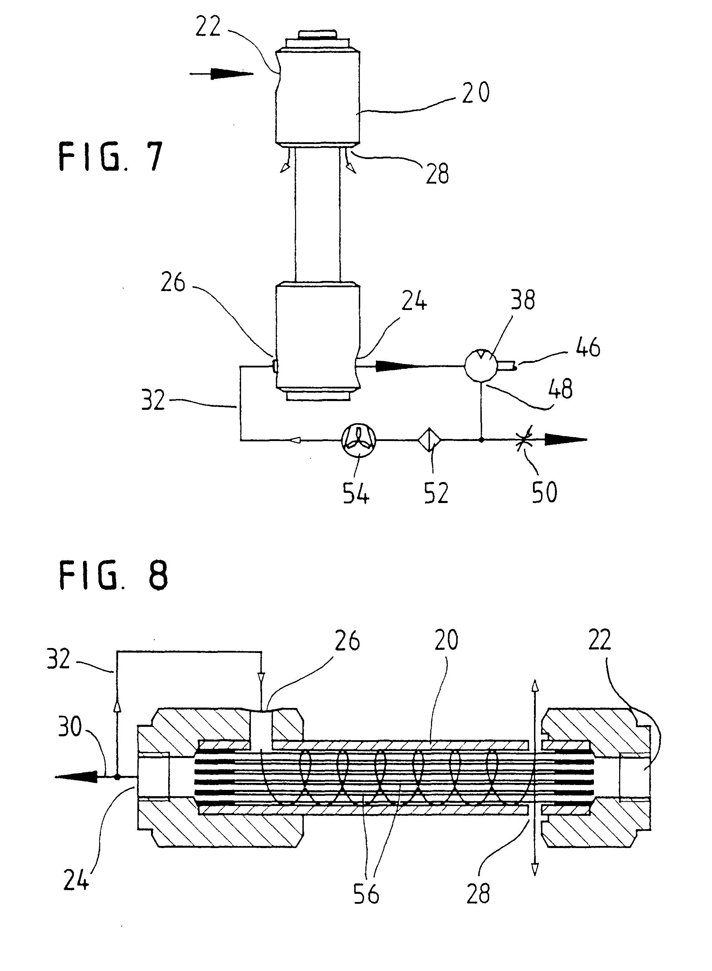

Das Ausführungsbeispiel nach Figur 7 entspricht den Ausführungsbeispielen nach Figur 5 und 6, nunmehr ist aber in der Speiseleitung 32 zusätzlich noch ein Filter 52 und ein Ventilator 54 vorgesehen. Aufgrund des Ventilators 54 ist es möglich, dass der Druck am Luftausgang 48 des Verbrauchers 38 den Wert Null haben kann. Grundsätzlich ist dies nicht notwendig, weil Verbraucher mit einer Druckdifferenz betrieben werden müssen und üblicherweise der Druck in der Hauptleitung 30 größer ist als die Druckdifferenz, die für den Verbraucher 38 benötigt wird. Im Normalfall kann der verbliebene Druck benutzt werden, um den Spülbereich zu durchströmen. Steht er allerdings nicht zur Verfügung, z. B. weil lange Leitungen vorliegen, hat der Ventilator 54 die Aufgabe, die Luft durch den Spülbereich hindurchzufördern.

Unabhängig vom Ventilator hat das Filter 52 die Aufgabe, eventuelle Verschmutzungen, die durch den Verbraucher 38 eingetragen worden sind, zurückzuhalten.

Anhand von Figur 8 wird ein Filtergehäuse 20 erläutert, das besonders ausgelegt ist für einen geringen Druckabfall im Bereich der Spülluft. In bekannter Weise sind im Filtergehäuse 20 eine Vielzahl von Hohlfasermembranen 56 angeordnet. Sie sind endseitig so in Halterungen eingegossen, dass an den Endbereichen jeweils nur ihr Innenraum zugänglich ist.

Im Betrieb strömt von rechts feuchte Druckluft ein, sie läuft durch die Innenräume der einzelnen Hohlfasermembranen 56 und tritt links wieder aus. Ein Anteil der getrockneten Druckluft wird nach entsprechender Expansion (nicht dargestellt) in den Spüllufteingang 26 eingespeist. Dieser ist so ausreichend bemessen, dass an ihm nur ein geringer Druckabfall auftritt. Die Spülluft läuft entsprechend der schraubenlinienförmigen Darstellung der Pfeile in Figur 8 nach rechts, also im Gegensinn zur Druckluft. Sie tritt am Spülluftausgang 28 aus. Dieser und auch der Bereich innerhalb des Gehäuses 20 sind so ausreichend bemessen, dass ein möglichst geringer Druckabfall für die Spülluft auftritt.

## Patentansprüche

1. Trocknungsvorrichtung für Druckluft
- mit einem Filtergehäuse (20), a) das einen Einlaß (22) für feuchte Druckluft, einen Auslaß (24) für getrocknete Druckluft, einen Spüllufteingang (26) und einen Spülluftausgang (28) aufweist und b) in dem ein Membranfilter, vorzugsweise ein Bündel Hohlfasermembranen, angeordnet ist, auf dessen einer Filterseite die Druckluft entlangstreicht, auf dessen anderer Filterseite die Spülluft, insbesondere in Gegenrichtung zur Druckluft, strömt und das selektiv durchlässig ist für Wasserdampf und
- mit einer Speiseleitung (32), durch die vom Auslaß (24) stammende und damit getrocknete Druckluft in den Spüllufteingang (26) eingespeist wird,
**dadurch gekennzeichnet, dass** in der Speiseleitung (32) ein Absperrmittel (34, 36, 38) angeordnet ist, dessen Sperrstellung vom Druckluftverbrauch beeinflußt ist, dergestalt dass mehr Spülluft zur Verfügung gestellt wird, wenn mehr Druckluft von einem Verbraucher entnommen wird und dass weniger Spülluft zur Verfügung gestellt wird, wenn weniger Druckluft von einem Verbraucher entnommen wird.

2. Trocknungsvorrichtung nach Anspruch 1, **dadurch gekennzeichnet, dass** das Absperrmittel einen eigenen Antrieb, insbesondere einen elektrischen, elektromagnetischen, pneumatischen oder hydraulischen Antrieb hat.

3. Trocknungsvorrichtung nach Anspruch 1, **dadurch gekennzeichnet, dass** das Absperrmittel eine Öffnungsstellung, eine Schließposition und Zwischenstellungen zwischen diesen hat.

4. Trocknungsvorrichtung nach Anspruch 1, **dadurch gekennzeichnet, dass** hinter dem Auslaß (24) für getrocknete Druckluft ein Strömungsfühler (42), insbesondere ein Strömungswächter oder Strömungssensor, für die vom Auslaß (24) zu einem Verbraucher (38) strömende Druckluft angeordnet ist und dass dessen Ausgangssignal am Antrieb des Absperrmittels anliegt, ggf. unter Zwischenschaltung einer Steuereinheit (44).

5. Trocknungsvorrichtung nach Anspruch 1, **dadurch gekennzeichnet, dass** am Auslaß (24) für getrocknete Druckluft ein Verbraucher (38) angeschlossen ist, der einen Betriebsschalter aufweist und dass der Betriebsschalter eine Verbindung mit dem Antrieb des Absperrmittels aufweist.

6. Trocknungsvorrichtung nach Anspruch 1, **dadurch gekennzeichnet, dass** das Absperrmittel durch ein druckluftbetriebenes Gerät, insbesondere Werkzeug, gebildet ist.

7. Trocknungsvorrichtung nach Anspruch 6, **dadurch gekennzeichnet, dass** der Luftausgang (48) des druckluftbetriebenen Gerätes (38) über eine Regelvorrichtung für Luft mit dem Spüllufteingang (26) verbunden ist.

8. Trocknungsvorrichtung nach Anspruch 7, **dadurch gekennzeichnet, dass** zwischen dem Luftausgang (48) des druckluftbetriebenen Geräts (38) und dem Spüllufteingang (26) ein Mengenregler für Luft angeordnet ist.

9. Verfahren zur Trocknung von Druckluft mit einem Filtergehäuse (20), a) das einen Einlaß (22) für feuchte Druckluft, einen Auslaß (24) für getrocknete Druckluft, einen Spüllufteingang (26) und einen Spülluftausgang (28) aufweist und b) in dem ein Membranfilter, vorzugsweise ein Bündel Hohlfasermembranen, angeordnet ist, auf dessen einer Filterseite die Druckluft entlangstreicht, auf dessen anderer Filterseite die Spülluft, insbesondere in Gegenrichtung zur Druckluft, strömt und das selektiv durchlässig ist für Wasserdampf und mit einem am Auslaß (24) angeschlossenen, druckluftbetriebenen Verbraucher (38), der einen Luftausgang (48) hat, **dadurch gekennzeichnet, dass** zumindest ein Anteil der am Luftausgang (48) anfallenden Luft über eine Speiseleitung (32) dem Spüllufteingang (26) zugeleitet wird.

## Claims

1. Dryer for compressed air
- with a filter bowl (20), a) which comprises an inlet (22) for damp compressed air, an outlet (24) for dried compressed air, a scavenging air inlet (26) and a scavenging air outlet (28) and b) in which is accommodated a membrane filter, preferably a bundle of hollow fibre membranes, one side of said membrane filter being stroked by the compressed air, while the scavenging air flows on the other side of the membrane filter in the direction opposite to that of the compressed air, and which membrane filter lets selectively water steam flow through and
- with a feeder pipe (32), through which the compressed air coming from the outlet (24) and thus being dried, is fed into the scavenging air inlet (26),
**characterised by** the fact that closing means (34, 36, 38), the closed position of which depends on the consumption of compressed air in such a way that more or less scavenging air is made available when more or less compressed air is extracted by a connected device, operated by compressed air, is allocated in the feeder pipe (32).

2. Dryer according to claim 1, **characterised by** the fact that the closing means have its own drive, particularly an electrical, electromagnetic, pneumatic or hydraulic drive.

3. Dryer according to claim 1, **characterised by** the fact that the closing means have an open position, a closed position and between these intermediate positions.

4. Dryer according to claim 1, **characterised by** the fact that behind the outlet (24) for dried compressed air a flow feeler (42), particularly a flow switch or flow sensor, is fitted for the compressed air flowing from the outlet (24) to a consumer (38), and that its output signal is adjacent to the drive of the closing means, as the case may be, through the interposition of a control unit 44).

5. Dryer according to claim 1, **characterised by** the fact that a consumer (38) is connected to the outlet (24) for dried compressed air, which shows an operating switch and that the operating switch shows a connection with the drive of the closing means.

6. Dryer according to claim 1, **characterised by** the fact that the closing means are formed by a device, operated by compressed air, particularly a compressed-air operated tool.

7. Dryer according to claim 6, **characterised by** the fact that the air outlet (48) of the device, operated by compressed air (38) is connected with the scavenging air inlet (26) via a control device for air.

8. Dryer according to claim 7, **characterised by** the fact that a volume control is fitted between the air outlet (48) of the device, operated by compressed air (38) and the scavenging air inlet (26).

9. Procedure for drying of compressed air with a filter bowl (20), a) which comprises an inlet (22) for damp compressed air, an outlet (24) for dried compressed air, a scavenging air inlet (26) and a scavenging air outlet (28) and b) in which is accommodated a membrane filter, preferably a bundle of hollow fibre membranes, one side of said membrane filter being stroked by the compressed air, while the scavenging air flows on the other side of the membrane filter in the direction opposite to that of the compressed air, and which membrane filter lets selectively water steam flow through and is connected with a consumer, attached to the outlet (24), operated by compressed air (38), and having an air outlet (48), **characterised by** the fact that at least one part of the air arising at the air outlet (48) is fed via a feeder pipe (32) into the scavenging air inlet (26).

## Revendications

1. Dispositif de séchage pour l'air comprimé
- avec un boîtier de filtre (20), a) qui présente une entrée (22) pour l'air comprimé humide, une sortie (24) pour l'air comprimé séché, une entrée d'air de balayage (26) et une sortie d'air de balayage (28), et b) dans lequel est disposé un filtre à membrane, de préférence un faisceau de membranes de fibres creuses, sur un côté du filtre passant l'air comprimé, sur l'autre côté du filtre passant l'air de balayage, en particulier dans le sens opposé à celui de l'air comprimé, et ledit filtre à membrane étant sélectivement perméable à la vapeur d'eau, et
- avec une conduite d'alimentation (32) à travers laquelle l'air comprimé qui provient de la sortie (24) et qui est donc séché est introduit dans l'entrée d'air de balayage (26),
**caractérisé par le fait qu'**un moyen d'arrêt (34, 36, 38) est disposé dans la conduite d'alimentation (32), la position d'arrêt du moyen d'arrêt étant influencée par la consommation d'air comprimé de telle manière que plus d'air de balayage est mis à la disposition lorsqu'un appareil consommateur prend plus d'air comprimé, et que moins d'air de balayage est mis à la disposition lorsqu'un appareil consommateur prend moins d'air comprimé.

2. Dispositif de séchage selon la revendication 1, **caractérisé par le fait que** le moyen d'arrêt présente un propre entraînement, en particulier un entraînement électrique, électromagnétique, pneumatique ou hydraulique.

3. Dispositif de séchage selon la revendication 1, **caractérisé par le fait que** le moyen d'arrêt présente une position d'ouverture, une position de fermeture et des positions intermédiaires situées entre celles-ci.

4. Dispositif de séchage selon la revendication 1, **caractérisé par le fait qu'**un palpeur de courant (42), en particulier un contrôleur de courant ou un détecteur de courant pour l'air comprimé qui passe de la sortie (24) vers un appareil consommateur (38) est disposé derrière la sortie (24) pour l'air comprimé séché, et que le signal de sortie de ce palpeur est appliqué à l'entraînement du moyen d'arrêt, le cas échéant en intercalant une unité de commande (44).

5. Dispositif de séchage selon la revendication 1, **caractérisé par le fait qu'**un appareil consommateur (38) qui présente un interrupteur de service est connecté à la sortie (24) pour l'air comprimé séché, et que ledit interrupteur de service présente une connexion avec l'entraînement du moyen d'arrêt.

6. Dispositif de séchage selon la revendication 1, **caractérisé par le fait que** le moyen d'arrêt est formé par un appareil, en particulier un outil, actionné par air comprimé.

7. Dispositif de séchage selon la revendication 6, **caractérisé par le fait que** la sortie d'air (48) de l'appareil (38) actionné par air comprimé est reliée par un dispositif de réglage d'air à l'entrée d'air de balayage (26).

8. Dispositif de séchage selon la revendication 7, **caractérisé par le fait qu'**un régulateur de débit d'air est disposé entre la sortie d'air (48) de l'appareil (38) actionné par air comprimé et l'entrée d'air de balayage (26).

9. Procédé de séchage d'air comprimé avec un boîtier de filtre (20) a) qui présente une entrée (22) pour l'air comprimé humide, une sortie (24) pour l'air comprimé séché, une entrée d'air de balayage (26) et une sortie d'air de balayage (28), et b) dans lequel est disposé un filtre à membrane, de préférence un faisceau de membranes de fibres creuses, sur un côté du filtre passant l'air comprimé, sur l'autre côté du filtre passant l'air de balayage, en particulier dans le sens opposé à celui de l'air comprimé, et ledit filtre à membrane étant sélectivement perméable à la vapeur d'eau, et avec un appareil consommateur (38) qui est connecté à la sortie (24), qui est actionné par air comprimé et qui présente une sortie d'air (48), **caractérisé par le fait que** du moins une part de l'air résultant à la sortie d'air (48) est amenée via une conduite d'alimentation (32) à l'entrée d'air de balayage (26).
